# EUROPÄISCHE PATENTANMELDUNG

(11) **EP 3 363 570 A1**
(43) Veröffentlichungstag der Anmeldung: **22.08.2018**
(21) Anmeldenummer: 17207053.4
(22) Anmeldetag: 13.12.2017
(51) Int. Cl.: B23C 5/04, B23C 3/34, B23C 5/28, B23P 9/00, C23C 4/02

(54) **VORRICHTUNG ZUR BEARBEITUNG VON ZYLINDERWÄNDEN VON VERBRENNUNGSMOTOREN**

(30) Priorität: 15.02.2017 DE 102017202394
(71) Anmelder: Hoffmann GmbH Qualitätswerkzeuge, 81241 München (DE)
(72) Erfinder: LIFKA, Josef, 84095 Furth (DE)
(74) Vertreter: Seemann & Partner Patentanwälte mbB

(57) **Zusammenfassung**

Die Erfindung betrifft eine Vorrichtung zur Bearbeitung von Zylinderwänden von Verbrennungsmotoren (1), umfassend ein Schneidelement (4). Die Vorrichtung zur Bearbeitung von Zylinderwänden von Verbrennungsmotoren (1) zeichnet sich dadurch aus, dass das Schneidelement (4) auf einem rotierenden Schneidring (3) angeordnet ist, wobei das Schneidelement (4) eine Schlitzkontur (5) mit einer Mehrzahl von in Richtung der Rotationsachse nebeneinander angeordneten Schneiden (6) aufweist, wobei sich die einzelnen Schneiden (6) in Rotationsrichtung erstrecken.

## Beschreibung

Die Erfindung betrifft eine Vorrichtung zur Bearbeitung von Zylinderwänden von Verbrennungsmotoren, umfassend ein Schneidelement.

Um bei Verbrennungsmotoren Gewicht zu sparen, werden die Zylinderkurbelgehäuse häufig aus Leichtmetall, beispielsweise Aluminium, gefertigt. Da es sich bei Aluminium jedoch um ein vergleichsweise weiches Metall handelt, kommt es im Bereich der Zylinder zu starken Verschleißerscheinungen.

Zur Reduzierung der Verschleißerscheinungen werden die Innenwände der Zylinder häufig mit einer Beschichtung ausgekleidet, welche die Reibung verringert. Die Beschichtung erfolgt dabei durch Aufspritzen des eingeschmolzenen Beschichtungswerkstoffes auf die Zylinderinnenwand.

Um eine gute Haftung der Beschichtung auf der Zylinderinnenwand zu gewährleisten, wird diese zuvor mit speziellen Verfahren bearbeitet. Insbesondere geschieht dies durch die Einbringung von den Umfang des Zylinders umlaufenden Schlitzen in die Zylinderwand. Anschließend werden die zwischen den Schlitzen zurückbleibenden Erhebungen mittels eines Rollierwerkzeugs plastisch umgeformt, so dass Hinterschnitte entstehen, die eine bessere Haftung der Beschichtung ermöglichen.

Zum Einbringen der Schlitze in die Zylinderwand können beispielsweise Sägevorrichtungen verwendet werden. Das Dokument DE 10 2013 011 726 A1 beschreibt ein Verfahren, das unter Verwendung eines solchen Sägewerkzeugs Schlitze in die Zylinderwände eines Verbrennungsmotors einbringt, mit Hilfe eines Rollierwerkzeugs die entstehenden Stege plastisch umformt und schließlich mittels eines Spritzkopfs eine Beschichtungsschicht auf die Zylinderwand aufbringt. Das Sägewerkzeug umfasst dabei ein ringförmiges Sägeblatt mit einer Vielzahl von Schneidezähnen, welche Schlitze in die Zylinderwand einbringen. Nach dem Einbringen eines Schlitzes wird die Sägevorrichtung in Richtung der Rotationsachse weiterbewegt und ein weiterer Schlitz eingebracht. In einer weiteren Ausführung des Sägewerkzeugs umfasst das Werkzeug eine Mehrzahl von übereinander angeordneten Sägeblättern, die zur gleichzeitigen Eintragung von mehreren Schlitzen verwendet werden.

Da der Abstand der einzelnen Sägeblätter jedoch größer als der Abstand der benötigten Schlitze ist, muss das Werkzeug nach einem Sägevorgang um einen Abstand in Richtung der Rotationsachse verschoben werden, der einem Bruchteil des Abstands zwischen den Sägeblättern entspricht. Durch dieses Versetzen des Werkzeugs ist der beschriebene Prozess vergleichsweise zeitaufwändig.

Der Erfindung liegt die Aufgabe zugrunde, eine Vorrichtung zur Bearbeitung von Zylinderwänden von Verbrennungsmotoren, umfassend ein Schneidelement, bereitzustellen, das eine schnelle und prozesssichere Bearbeitung von Zylinderwänden ermöglicht.

Diese Aufgabe wird gelöst durch eine Vorrichtung zur Bearbeitung von Zylinderwänden von Verbrennungsmotoren, umfassend ein Schneidelement, die dadurch fortgebildet ist, dass das Schneidelement auf einem rotierenden Schneidring angeordnet ist, wobei das Schneidelement eine Schlitzkontur mit einer Mehrzahl von in Richtung der Rotationsachse nebeneinander angeordneten Schneiden aufweist, wobei sich die einzelnen Schneiden in Rotationsrichtung erstrecken.

Durch die Verwendung eines Schneidelements mit einer Schlitzkontur mit einer Mehrzahl von in Richtung der Rotationsachse nebeneinander angeordneten Schneiden werden in einem einzigen Schneidevorgang alle benötigten Schlitze in die Zylinderwand eingebracht. Ein Versetzen des Schneidrings in Richtung der Rotationsachse ist somit nicht erforderlich.

Insbesondere wird das Schneidelement oder Schneiden des Schneidelements aus Diamant gefertigt, wodurch die Schneiden einen besseren Schutz gegen Abnutzung aufweisen. Vorzugsweise ist das Schneidelement lösbar verbindbar mit dem Schneidring. Hierdurch lassen sich einfach und kostengünstig Schneidelemente austauschen.

Vorzugsweise sind die Schneidelemente im Wesentlichen quaderförmig, wobei die Schlitzkontur in eine der Flächen des quaderförmigen Schneidelements durch Schneidnuten eingebracht ist. Die Schneidnuten haben vorzugsweise eine Tiefe von 0,1 bis 1 mm, insbesondere vorzugsweise von 0,3 bis 0,7 mm, und besonders bevorzugt bei 0,5 mm. Bei einer Frontansicht der Schneidnuten sind diese bevorzugt im unteren Bereich breiter als im oberen Bereich, wobei im oberen Bereich der Bereich der Schneiden vorgesehen ist, der zuerst in Eingriff mit dem Werkstück gelangt. Hierdurch ergibt sich ein besseres Schneidverhalten. Die Schneiden können ferner frei geschliffen sein, um das Schneidverhalten weiter zu verbessern. Ferner ist es bevorzugt, wenn die Schneidelemente mit einem Anstellwinkel zu einer Schnittkante versehen sind. Der Anstellwinkel ist vorzugsweise in einem Bereich von 1° bis 3°.

Vorzugsweise ist das Schneidelement auf einer Haltevorrichtung aufgebracht, wobei die Haltevorrichtung insbesondere lösbar verbindbar mit dem Schneidring ist. Hierdurch ist eine erhöhte Prozesssicherheit bei einfacher und kostengünstiger Austauschbarkeit der Schneidelemente bzw. der Haltevorrichtungen, auf denen jeweils ein Schneidelement aufgebracht ist, möglich.

Vorzugsweise weist der Schneidring (3) mindestens einen äußeren Umfangsabschnitt (7) mit im Wesentlichen konstantem Außenradius, mindestens einen äußeren Umfangsabschnitt (8) mit sich in Rotationsrichtung (16) kontinuierlich veränderndem Außenradius und mindestens einen äußeren Umfangsabschnitt (9) mit im Wesentlichen in radialer Richtung verlaufender Außenkante auf.

Vorzugsweise liegt das Schneidelement (4) oder die Haltevorrichtung (20) mit einer Fläche an dem äußeren Umfangsabschnitt des Schneidrings (3) mit sich in Rotationsrichtung (16) kontinuierlich veränderndem Außenradius und mit einer weiteren Fläche an dem äußeren Umfangsabschnitt des Schneidrings (3) mit im Wesentlichen in radialer Richtung verlaufender Außenkante an.

Insbesondere weisen die Schneidringe einen gleichbleibenden Innenradius auf. Die Außenfläche umfasst vorzugsweise mindestens einen als ersten Umfangsabschnitt ausgebildeten äußeren Umfangsabschnitt mit im Wesentlichen konstantem Außenradius, mindestens einen als zweiten Umfangsabschnitt ausgebildeten äußeren Umfangsabschnitt, insbesondere mit sich in Rotationsrichtung kontinuierlich veränderndem Außenradius, und mindestens einen als dritten Umfangsabschnitt ausgebildeten äußeren Umfangsabschnitt mit im Wesentlichen in radialer Richtung verlaufender Außenkante. Auf diese Weise kann das Schneidelement oder die Haltevorrichtung mit dem darauf angebrachten Schneidelement vorzugsweise so auf dem Schneidring angeordnet werden, dass eine erste Fläche an dem zweiten Umfangsabschnitt und eine zweite Fläche an dem dritten Umfangsabschnitt anliegt. Vorzugsweise sind die erste und die zweite Fläche des Schneidelements oder der Haltevorrichtung formkomplementär zu den Bereichen des zweiten und dritten Umfangsabschnitts, an denen diese Flächen anliegen.

Die Umfangsabschnitte können auch anders ausgebildet sein. So kann beispielsweise der zweite Umfangsabschnitt eine stufenförmig sich verändernde Außenkante aufweisen oder eine Außenkante mit einem konstanten Radius, der kleiner als der Außenradius des ersten Umfangsabschnittes ist. Zudem kann der dritte Umfangsabschnitt in einem Winkel von 0 bis 45 Grad zur Radialen in beide Richtungen ausgebildet sein.

Zudem können mehrere Schneidelemente auf einem Schneidring angeordnet werden. Dabei können die Schneidelemente so ausgebildet sein, dass die Schneiden eines ersten Schneidelements gegenüber den Schneiden eines zweiten Schneidelements in Richtung der Rotationsachse gegeneinander versetzt sind. Auf diese Weise kann die Zahl der Schneiden, die zur Einbringung der benötigten Schlitze notwendig sind, auf mehrere Schneidelemente verteilt werden. Die zwischen den Schneiden eines einzelnen Schneidelements bestehende Schneidnut ist dann im Vergleich zu der Verwendung nur eines Schneidelements größer. Der Versatz zwischen der Schneide des ersten Schneidelements und der Schneide des zweiten Schneidelements beträgt gemäß dieser Ausführungsform ein Vielfaches des Abstands zwischen den Schneiden bei Verwendung nur eines Schneidelements zum Einbringen der Schlitze, beispielsweise das Doppelte. Dieses ermöglicht eine bessere Wegleitung der während des Schneidvorgangs erzeugten Späne. Die Schneide des ersten Schneidelements und die Schneide des zweiten Schneidelements können auch ohne Versatz zueinander in Richtung der Rotationsachse auf einem Schneidring angeordnet sein. Hierdurch wird der Verschleiß der Schneidelemente minimiert.

Es können vorzugsweise drei oder vier Schneidelemente auf einem Schneidring vorgesehen sein. Vorzugsweise können auch fünf oder sechs Schneidelemente auf einem Schneidring vorgesehen sein.

In einer bevorzugten Ausführung wird eine Mehrzahl von Schneidringen mittels eines Dorns auf einer gemeinsamen Rotationsachse angeordnet. Jeder Schneidring weist dabei mindestens ein Schneidelement auf, das auf der gesamten Höhe des Schneidrings im Zylinder während des Schneidvorgangs alle benötigten Schlitze einbringt. Hierdurch kann die Länge der einzelnen Schneidelemente in Richtung der Rotationsachse klein sein, so dass die Schneidelemente günstig gefertigt werden können und prozessstabil sind. Dies ermöglicht eine deutlich vereinfachte Fertigung der einzelnen Schneidelemente

Vorzugsweise können als Mehrzahl von Schneidringen 10 bis 20 Schneidringe vorgesehen sein. Vorzugsweise werden auf einem Dorn mehrere Schneidringe verwendet, wobei die Anzahl der Schneidelemente pro Schneidring unterschiedlich ist. Vorzugsweise ist hierbei auf einem in Rotationsachse äußersten Schneidring eine Anzahl von sechs Schneidelementen oder fünf Schneidelementen vorgesehen, wohingegen auf den anderen Schneidringen eine Anzahl von drei oder vier Schneidelementen vorgesehen ist. Hierdurch ist eine sehr präzise Fertigung möglich.

Vorzugsweise ist in Rotationsachsenrichtung gesehen der Abstand eines Schneidelements eines Schneidrings zu einem Schneidelement eines benachbarten Schneidrings auf einen Abstand von zwei benachbarten Schneiden eines Schneidelements einstellbar. So ergibt sich im Schnittbild des Zylinders ein gleichmäßiges Schlitz/Steg-Muster. Alternativ kann in einer bevorzugten Ausführungsform eine in Richtung der Rotationsachse bündige Anordnung der Schneidelemente benachbarter Schneidringe vorgesehen sein.

Vorzugsweise sind die Schneidringe beim Einbau auf dem Dorn um beliebige Winkelabstände in Rotationsrichtung zueinander verdrehbar und lösbar fixierbar. Auf diese Weise lassen sich die Späne besser abführen.

Vorzugsweise weist der Schneidring eine Kühlkanalbohrung zur Kühlung des Schneidelements auf. Die Kühlkanalbohrung befindet sich dabei vorzugsweise in einem äußeren Umfangsabschnitt mit sich in Rotationsrichtung kontinuierlich veränderndem Außenradius nahe dem Schneidelement. Durch die Kühlkanalbohrung wird ein Kühlmittel geleitet, welches durch die Rotation des Schneidrings auf das Schneidelement trifft und dieses vor Überhitzung schützt. Zur Leitung des Kühlmittels zu den Kühlkanalbohrungen ist in den Dorn eine Anzahl von Kühlkanälen eingebracht. Beim Einbau der Schneidringe auf dem Dorn wird somit eine Verbindung zwischen Kühlkanälen und Kühlkanalbohrungen hergestellt.

Ebenfalls bevorzugt weist der Schneidring eine Spülbohrung zum Wegleiten der während des Schneidvorgangs erzeugten Späne auf. Die Spülbohrung befindet sich dabei vorzugsweise im Umfangsabschnitt des Schneidrings mit im Wesentlichen konstantem Außenradius. Die Spülbohrungen sind mit Spülkanälen im Dorn verbunden, durch die ein Spülmittel eingeleitet wird.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische perspektivische Darstellung der Vorrichtung zur Bearbeitung von Zylinderwänden eines Verbrennungsmotors,
- Fig. 2: eine schematische Explosionsdarstellung der Vorrichtung zur Bearbeitung von Zylinderwänden eines Verbrennungsmotors,
- Fig. 3: eine schematische perspektivische Darstellung eines Schneidrings,
- Fig. 4: eine schematische perspektivische Darstellung des Schneidelements, angeordnet am Schneidring,
- Fig. 5: eine schematische Vorderansicht einer Haltevorrichtung mit einem Schneidelement und
- Fig. 6: eine schematische Schnittdarstellung durch die Haltevorrichtung aus Fig. 5 entlang der Linie A-A.

In den Zeichnungen sind jeweils gleiche oder gleichartige Elemente und/oder Teile mit denselben Bezugsziffern versehen, so dass von einer erneuten Vorstellung jeweils abgesehen wird.

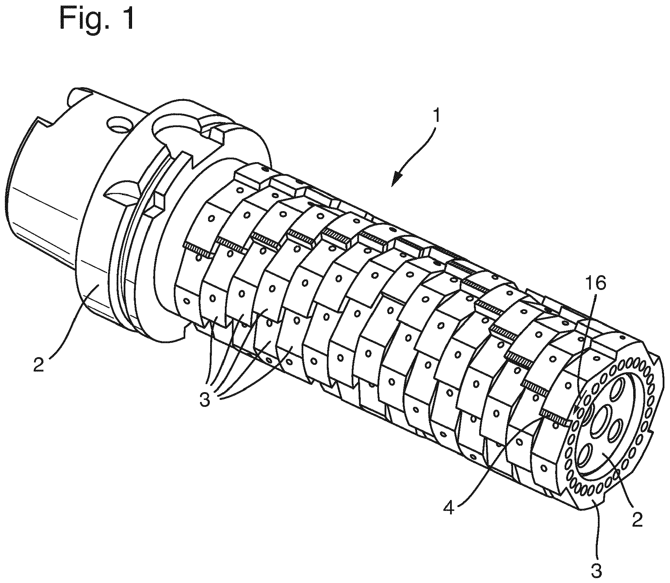

Fig. 1 zeigt eine schematische perspektive Darstellung einer Vorrichtung 1 zur Bearbeitung von Zylinderwänden eines Verbrennungsmotors mit einem Dorn 2 und einer Anzahl von Schneidringen 3. Die Schneidringe 3 sind dabei nebeneinander oder hintereinander auf dem Dorn 2 angeordnet.

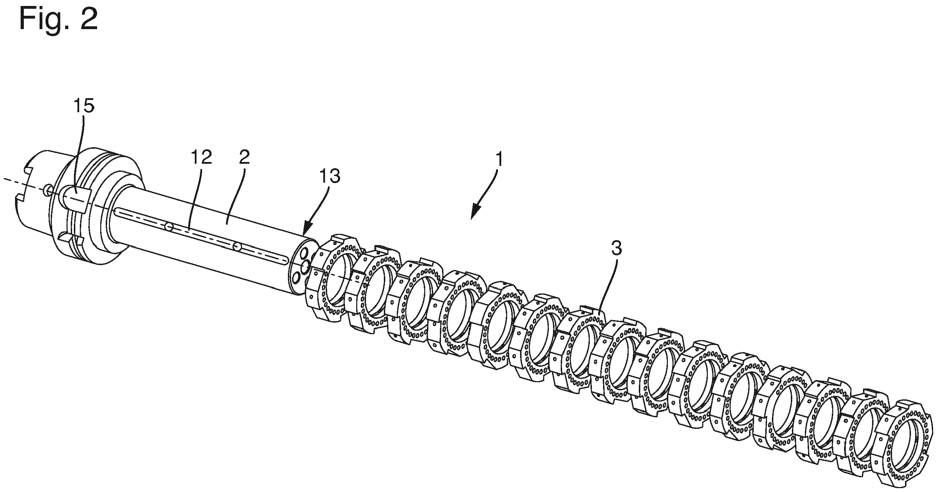

Die schematische Explosionsdarstellung der Vorrichtung 1 zur Bearbeitung von Zylinderwänden eines Verbrennungsmotors verdeutlicht noch einmal den Einbau der Schneidringe 3 auf dem Dorn 2. Dieses ist in Fig. 2 gezeigt.

Die Schneidringe 3 werden nacheinander im gewünschten Winkel gegenüber der Rotationsachse 15 auf dem Dorn 2 angeordnet und dort lösbar fixiert. Die längsaxiale Ausdehnung des Dorns 2 ist so gewählt, dass alle Schneidelemente 3 dort genau Platz finden. Die Länge in Richtung der Rotationsachse 15 der nebeneinander aufgereihten Schneidringe 3 entspricht der Tiefe des Bereichs der Zylinderwand, in den Schlitze eingebracht werden.

Während des Vorgangs zur Einbringung von Schlitzen in die Zylinderwand dreht sich der Dorn 2 und somit die Schneidringe 3 um die Rotationsachse 15, die der längsaxialen Richtung bzw. der Längsachse des Dorns 2 entspricht.

Der maximale Durchmesser der Schneidringe 3 ist kleiner als der Innendurchmesser der zu bearbeitenden Zylinder, um ein problemloses Eindringen der Vorrichtung zur Bearbeitung von Zylinderwänden eines Verbrennungsmotors 1 in das Zylinderinnere zu ermöglichen. Zum Schneiden von Schlitzen in die Zylinderinnenwand rotiert der Dorn 2 mit den Schneidringen 3 um eine Rotationsachse 15. Gleichzeitig wird der Dorn 2 in einer Ringbahn geführt, so dass der gesamte Innenumfang des zu bearbeitenden Zylinders mit Schlitzen versehen wird. Die Ringbahn des Dorns 2 kann eine Kreisbahn sein; es sind aber auch andere Ringbahnen denkbar.

Durch den Einbau verschiedener Schneidringe 3 auf dem Dorn 2 mit unterschiedlichen Winkeln gegenüber der Rotationsachse 15 zueinander können die Schlitzprofile, die im Höhenabschnitt jedes individuellen Schneidrings 3 in die Zylinderwand eingebracht werden, variiert werden. Es können also mehrere in der längsaxialen Richtung des Zylinders übereinanderliegende Schlitzprofile in der Zylinderwand erzeugt werden. Dies führt zu einer weiteren Verbesserung der Hafteigenschaften der Beschichtungsschicht an der Zylinderinnenwand.

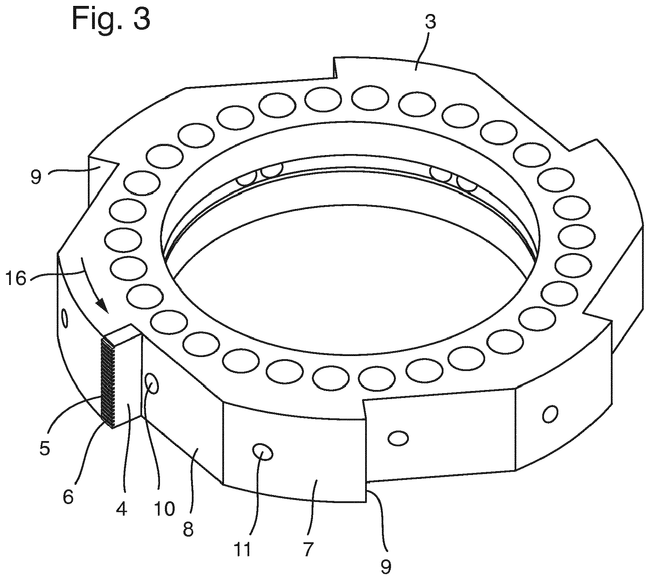

In Fig. 3 ist eine schematisch perspektive Darstellung des Schneidrings 3 gezeigt. Der Innenradius des Schneidrings 3 ist im Wesentlichen konstant, wobei eine Nut auf mittlerer Höhe des Innenumfangs verläuft. Der äußere Umfang des Schneidrings 3 kann im Wesentlichen in drei Abschnittsarten unterteilt werden: Äußerer Umfangsabschnitt mit im Wesentlichen konstantem Außenradius, der im Folgenden erster Umfangsabschnitt 7 genannt wird, äußerer Umfangsabschnitt mit sich in Rotationsrichtung 16 kontinuierlich veränderndem Außenradius, der im Folgenden zweiter Umfangsabschnitt 8 genannt wird, und äußerer Umfangsabschnitt mit im Wesentlichen in radialer Richtung verlaufender Außenkante, der im Folgenden dritter Umfangsabschnitt genannt wird. In der Ausführungsform der Fig. 3 sind jeweils sechs erste, zweite und dritte Umfangsabschnitte 7, 8 und 9 vorgesehen.

An dem Übergang zwischen einem zweiten Umfangsabschnitt 8 und einem dritten Umfangsabschnitt 9 wird das Schneidelement 4 angeordnet. Das Schneidelement 4 ist vorzugsweise im Wesentlichen quaderförmig, wobei die auf dem zweiten Umfangsabschnitt 8 angeordnete Fläche des Quaders so geformt ist, dass sie flächig auf diesem Umfangsabschnitt aufliegt. Dies gilt vorzugsweise in gleicher Weise für die Auflage der Seitenfläche des Schneidelements 4 auf dem dritten Umfangsabschnitt 9. Der zweite Umfangsabschnitt 8 kann auch eine stufenförmige Änderung des Außenradius aufweisen. Je nach geometrischer Ausgestaltung des zweiten und dritten Umfangsabschnitts 8, 9 ist das Schneidelement 4 mit den Flächen, die an dem zweiten und dritten Umfangsabschnitt 8, 9 anliegen, formkomplementär ausgebildet. In Fig. 3 ist nur ein Schneidelement 4 dargestellt. Es können allerdings auf dem dargestellten Schneidring 3 bis zu sechs Schneidelemente 4 angebracht sein oder werden, insbesondere jeweils anliegend an den Umfangsabschnitt 9 bzw. die Fläche 9.

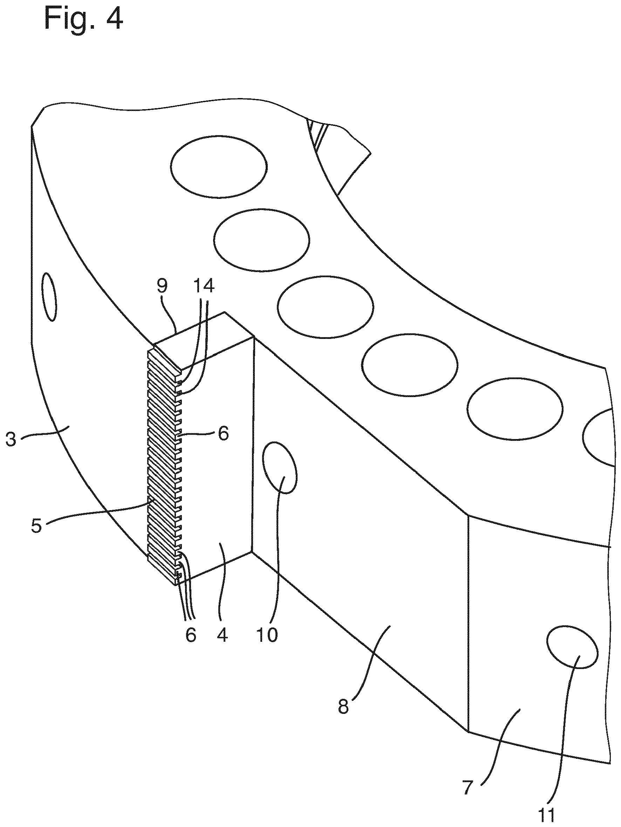

Auf der in radialer Richtung nach außen zeigenden Fläche des quaderförmigen Schneidelements 4 ist eine Schlitzkontur 5 eingebracht. Eine vergrößerte Darstellung des Schneidelements 4 ist in Fig. 4 dargestellt. Die Schlitzkontur 5 weist eine Reihe von Schneiden 6 auf, die sich in Richtung einer Rotationsrichtung 16 des Schneidrings 3 erstrecken. Die Schneiden 6 des Schneidelements 4 sind so dicht zusammen angeordnet, dass sie alle zur Haftung der Beschichtungsschicht notwendigen Schlitze in die Zylinderinnenwand einbringen, wenn die Schlitzkontur 5 in Kontakt mit der Zylinderinnenwand kommt. Zwischen den Schneiden 6 sind Schneidnuten 14 angeordnet.

In den Fig. 3 und 4 ist ebenfalls eine Anzahl Kühlkanalbohrungen 10 dargestellt, die in den zweiten Umfangsabschnitt 8 gebohrt sind. Die Kühlkanalbohrung 10 ist nahe am Schneidelement 4 angeordnet und ist mit dem in Fig. 2 gezeigten Kühlkanal 12 in für den Fachmann bekannter Weise verbunden. Durch den Kühlkanal 12 wird ein Kühlmittel in die Kühlkanalbohrung 10 geleitet, das in der Nähe des Schneidelements 4 aus dem Schneidring 3 austritt. Durch die Rotation des Schneidrings 3 wird das Kühlmittel gegen das Schneidelement 4 gedrückt und das Schneidelement 4 auf diese Weise gekühlt. Die Kühlkanalbohrung 10 kann in einem Winkel von der Radialen zu dem Schneidelement 4 hin bzw. in Richtung des Umfangsabschnittes 9 ausgebildet sein.

Neben den Kühlkanalbohrungen 10 weist der Schneidring 3 vorzugsweise ergänzend oder alternativ Spülbohrungen 11 auf, wie in den Fig. 3 und 4 gezeigt. Die Spülbohrungen 11 sind vorzugsweise jeweils im ersten Umfangsabschnitt 7 angeordnet.

Die Spülbohrungen 11 sind in für den Fachmann bekannter Weise mit einem im Dorn 2 angeordneten Spülkanal 13 verbunden, der in Fig. 2 nicht direkt sichtbar ist. Durch die Spülbohrungen 11 kann ein Spülmittel eingeleitet und/oder abgeleitet werden, wobei das Spülmittel die während des Schneidvorgangs entstehenden Späne wegleitet und so eine Störung des Schneidvorgangs durch diese Späne vermieden wird.

Die Spülbohrung 11 kann radial ausgebildet sein oder in einem Winkel zur Radialen, so dass ein Abfließen oder Abfördern von Späne von einem Außenbereich in einen Innenbereich des Schneidrings 3 vereinfacht wird. Im letzteren Fall ist zwischen dem ersten Umfangsabschnitt 7 und der Spülbohrung 11 vorzugsweise ein Winkel zwischen 10 Grad und 60 Grad, insbesondere vorzugsweise zwischen 25 Grad und 45 Grad, vorgesehen.

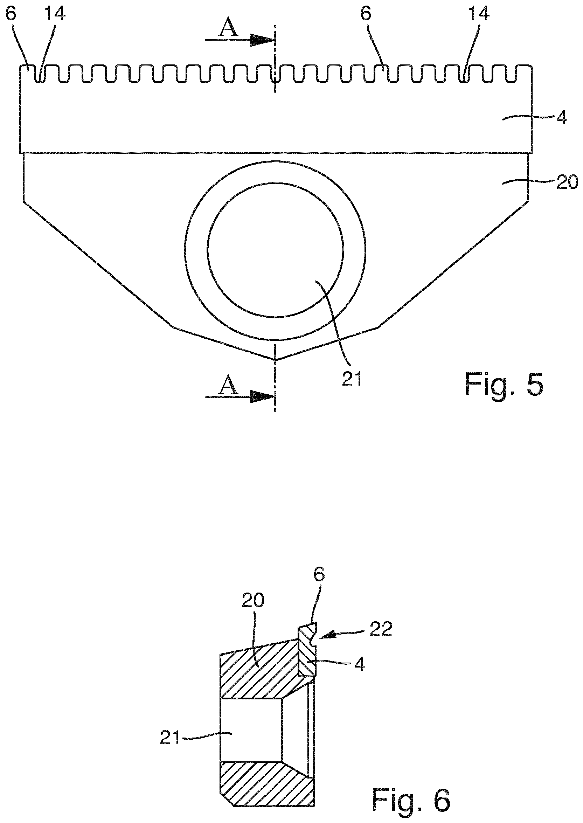

Figur 5 zeigt eine schematische Vorderansicht einer Haltevorrichtung 20 mit einem darauf angeordneten Schneidelement 4. Die Haltevorrichtung 20 kann mittels einer Schraube, die durch die Bohrung 21 geführt wird an dem Schneidring 3 befestigt werden. Die Kontur des Schneidrings 3 kann auf die Kontur der Haltevorrichtung 20 angepasst sein. Vorzugsweise sind die Konturen formkomplementär zueinander. In Figur 3 und Figur 4 würde dann zum einen die Kontur des Schneidrings 3 auf die Kontur der Haltevorrichtung 20 entsprechend angepasst sein und zum anderen die Haltevorrichtung 20 mit dem darauf angeordneten Schneidelement 4 aus Figur 5 das Schneidelement 4 aus den Figuren 3 und 4 ersetzen.

Figur 6 zeigt schematisch eine Schnittdarstellung entlang der Linie A-A der Figur 5. Es ist die Haltevorrichtung 20 mit der Bohrung 21 gezeigt und der Ort, an dem das Schneidelement 4 angebracht ist. Das Schneidelement 4 kann für einen besseren Schnitt eine Hinterschneidung bzw. eine Auskehlung 22 aufweisen. Alternativ kann auch auf die Auskehlung 22 verzichtet werden und eine plane Frontfläche vorgesehen sein.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 1: Vorrichtung zur Bearbeitung von Zylinderwänden von Verbrennungsmotoren
- 2: Dorn
- 3: Schneidring
- 4: Schneidelement
- 5: Schlitzkontur
- 6: Schneiden
- 7: erster Umfangsabschnitt
- 8: zweiter Umfangsabschnitt
- 9: dritter Umfangsabschnitt
- 10: Kühlkanalbohrung
- 11: Spülbohrung
- 12: Kühlkanal
- 13: Spülkanal
- 14: Schneidnut
- 15: Rotationsachse
- 16: Rotationsrichtung
- 20: Haltevorrichtung
- 21: Bohrung
- 22: Auskehlung

## Patentansprüche

1. Vorrichtung (1) zur Bearbeitung von Zylinderwänden von Verbrennungsmotoren, umfassend ein Schneidelement (4), **dadurch gekennzeichnet, dass** das Schneidelement (4) auf einem rotierenden Schneidring (3) angeordnet ist, wobei das Schneidelement (4) eine Schlitzkontur (5) mit einer Mehrzahl von in Richtung der Rotationsachse (15) nebeneinander angeordneten Schneiden (6) aufweist, wobei sich die einzelnen Schneiden (6) in Rotationsrichtung (16) erstrecken.

2. Vorrichtung (1) nach Anspruch 1, **dadurch gekennzeichnet, dass** das Schneidelement (4) aus Diamant ausgebildet ist oder Diamant umfasst.

3. Vorrichtung (1) nach Anspruch 1 oder 2, **dadurch gekennzeichnet, dass** das Schneidelement (4) im Wesentlichen quaderförmig ist, wobei die Schlitzkontur (5) in eine der Flächen des quaderförmigen Schneidelements (4) durch Schneidnuten (14) eingebracht ist.

4. Vorrichtung (1) nach einem der Ansprüche 1 bis 3, **dadurch gekennzeichnet, dass** das Schneidelement (4) auf einer Haltevorrichtung (20) aufgebracht ist, wobei die Haltevorrichtung (20) insbesondere lösbar verbindbar mit dem Schneidring (3) ist.

5. Vorrichtung (1) nach einem der Ansprüche 1 bis 4, **dadurch gekennzeichnet, dass** der Schneidring (3) mindestens einen äußeren Umfangsabschnitt (7) mit im Wesentlichen konstantem Außenradius, mindestens einen äußeren Umfangsabschnitt (8) mit sich in Rotationsrichtung (16) kontinuierlich veränderndem Außenradius und mindestens einen äußeren Umfangsabschnitt (9) mit im Wesentlichen in radialer Richtung verlaufender Au-ßenkante aufweist.

6. Vorrichtung (1) nach Anspruch 5, **dadurch gekennzeichnet, dass** das Schneidelement (4) oder die Haltevorrichtung (20) mit einer Fläche an dem äußeren Umfangsabschnitt des Schneidrings (3) mit sich in Rotationsrichtung (16) kontinuierlich veränderndem Außenradius und mit einer weiteren Fläche an dem äußeren Umfangsabschnitt des Schneidrings (3) mit im Wesentlichen in radialer Richtung verlaufender Außenkante anliegt.

7. Vorrichtung (1) nach einem der Ansprüche 1 bis 6, **dadurch gekennzeichnet, dass** auf dem Schneidring (3) eine Mehrzahl von Schneidelementen (4) angeordnet ist, wobei die längsaxial auf die Rotationsachse (15) bezogene Position mindestens einer Schneide (6) eines ersten Schneidelements (4) gegenüber der längsaxialen auf die Rotationsachse (15) bezogenen Position mindestens einer Schneide (6) eines zweiten Schneidelements (4) versetzt ist.

8. Vorrichtung (1) nach einem der Ansprüche 1 bis 7, **dadurch gekennzeichnet, dass** eine Mehrzahl von Schneidringen (3) mittels eines Dorns (2) auf einer gemeinsamen Rotationsachse (15) angeordnet ist.

9. Vorrichtung (1) nach Anspruch 8, **dadurch gekennzeichnet, dass** die Schneidringe (3) beim Einbau auf dem Dorn (2) um beliebige Winkelabstände in Rotationsrichtung (16) zueinander verdrehbar und lösbar fixierbar sind.

10. Vorrichtung (1) nach einem der Ansprüche 1 bis 9, **dadurch gekennzeichnet, dass** der Schneidring (3) in mindestens einem äußeren Umfangsabschnitt (8) mit sich in Rotationsrichtung (16) kontinuierlich verändernden Außenradius eine Kühlkanalbohrung (10) zur Kühlung des Schneidelements (4) aufweist.

11. Vorrichtung (1) nach einem der Ansprüche 1 bis 10, **dadurch gekennzeichnet, dass** der Schneidring (3) in mindestens einem äußeren Umfangsabschnitt (7) mit im Wesentlichen konstantem Außenradius eine Spülbohrung (11) zum Wegleiten der während des Schneidvorgangs erzeugten Späne aufweist.
